# EUROPEAN PATENT APPLICATION

(11) **EP 3 225 674 A1**
(43) Date of publication of application: **04.10.2017**
(21) Application number: 15864246.2
(22) Date of filing: 13.11.2015
(51) Int. Cl.: C09K 3/14, F16D 69/02

(54) **FRICTION MATERIAL COMPOSITION, AND FRICTION MATERIAL AND FRICTION MEMBER USING SAID FRICTION MATERIAL COMPOSITION**

(30) Priority: 26.11.2014 JP 2014239097; 24.12.2014 JP 2014260991; 24.12.2014 JP 2014260992
(71) Applicant: Japan Brake Industrial Co., Ltd., Hachioji-shi, Tokyo 192-0041 (JP)
(72) Inventor: UNNO Mitsuo, Tokyo 100-6606 (JP); MITSUMOTO Masamichi, Tokyo 100-6606 (JP)
(74) Representative: Eisenführ Speiser
(86) International application number: PCT/JP2015/081992
(87) International publication number: WO 2016/084628

(57) **Abstract**

A friction material composition that does not contain copper, which has a high environmental load, or containing copper in such small amount as to be not more than 0.5 mass % and that enables decrease in brake vibration in braking at high temperatures when used in a friction material such that for an automobile disc brake pad, is provided. A friction material obtained by molding the friction material composition is also provided. The friction material composition contains a binder, an organic filler, an inorganic filler, and a fibrous base material, and the friction material composition contains no copper as an element or contains not more than 0.5 mass % of copper, and also contains 2 to 5 mass % of steel fibers that have fiber lengths of 2500 µm or less.

## Description

### Technical Field

The present invention relates to a friction material composition that is suitable for a friction material of a disc brake pad or other part, which is used for braking an automobile or the like, and also relates to a friction material using the friction material composition.

### Background Art

Automobiles and other vehicles use friction materials in disc brake pads, brake linings, and other parts to brake. The friction material rubs against a mating material such as of a disc rotor or a brake drum and thereby performs braking. Thus, the friction material is required to have a preferable frictional coefficient, high wear resistance exhibiting a long service life, high strength, sound vibration performance for decreasing brake noise and low frequency noise, and other characteristics. The frictional coefficient is required to be constant regardless of vehicle speed, deceleration, and brake temperature.

On the other hand, copper contained in a friction material tends to be scattered as powder from wear of a brake and can cause pollution of rivers, lakes, oceans, and other natural environments, and thus, restriction of the use of copper has been increasing in recent years. Copper in the form of fibers or in the form of powder is contained in a friction material and is effective for providing thermal conductivity and improving wear resistance. Thus, thermal conductivity is decreased in a friction material that does not contain copper, and heat occurring at a friction interface does not dissipate in braking at high temperatures. As a result, amount of wear of the friction material is increased, and the increase in temperature is uneven in the friction material, thus causing increase in generation of brake vibration and other problems.

To solve these problems, a technique for improving thermal conductivity and wear resistance of a friction material composition that does not contain copper is disclosed in Japanese Unexamined Patent Application Laid-Open No. 2003-322183. According to this technique, a high thermal conductive material, such as graphite or magnesium oxide, is added to the friction material composition.

The friction material composition disclosed in Japanese Unexamined Patent Application Laid-Open No. 2003-322183 does not contain copper and still does not have sufficient effect on decreasing brake vibration, which is caused by uneven increase in temperature. Thus, brake vibration is increased in braking at high temperatures.

### Disclosure of the Invention

The present invention has been completed in view of these circumstances, and an object of the present invention is to provide a friction material composition for decreasing brake vibration in braking at high temperatures even though not containing environmentally harmful copper or containing copper in such small amount as to be not more than 0.5 mass %. Another object of the present invention is to provide a friction material that is obtained by molding the friction material composition.

The inventors of the present invention found that addition of steel fibers with short fiber lengths to a friction material composition that does not contain environmentally harmful copper, enables effective decrease in brake vibration in braking at high temperatures. That is, the inventors of the present invention found the following. The steel fibers with short fiber lengths dissipate frictional heat at a friction interface, thereby reducing the uneven increase in temperature, and these steel fibers also moderately clean organic decomposed substances that are generated on the friction interface. As a result, variation in brake torque is decreased in braking, whereby brake vibration is unlikely to occur. These effects are effectively developed when the steel fibers with short fiber lengths are contained in a composition that does not contain copper.

Moreover, the inventors of the present invention found that it is preferable to contain titanate having a layered crystal structure in addition to the steel fibers with short fiber lengths. The contained titanate is cleaved and has lubricating characteristics, and the steel fibers with short fiber lengths have reinforcing effects, and these characteristics effectively act at the fiction interface. Thus, the brake vibration is further decreased, and wear resistance at low temperatures is improved.

Furthermore, the inventors of the present invention found that it is more preferable to contain a combination of titanate having a tunnel crystal structure and titanate having the layered crystal structure in addition to steel fibers with predetermined fiber lengths. The two kinds of titanates have different hardness and effectively act at the friction surface, whereby an effect for decreasing a wear amount of a rotor is obtained in addition to the above-described effects.

The friction material composition of the present invention is based on these findings and contains a binder, an organic filler, an inorganic filler, and a fibrous base material. The friction material composition does not contain copper as an element or contains not more than 0.5 mass % of copper and 2 to 5 mass % of steel fibers having fiber lengths of 2500 µm or less.

In the friction material composition of the present invention, the steel fibers preferably have a curled shape and preferably have an average fiber diameter of 100 µm or less.

The titanate preferably includes titanate having a layered crystal structure, more preferably both titanate having a tunnel crystal structure and the titanate having the layered crystal structure. It is preferable that the titanate having the layered crystal structure be lithium potassium titanate or magnesium potassium titanate. It is also preferable that the titanate having the tunnel crystal structure be potassium hexatitanate, potassium octatitanate, or sodium titanate.

The friction material of the present invention is obtained by molding the friction material composition described above, and the friction member of the present invention is formed by using the friction material, which is formed of the friction material composition, and a back metal.

### Effects of the Invention

The present invention provides a friction material composition that does not use copper, which has a high environmental load, and that enables decrease in brake vibration in braking at high temperatures when used in a friction material such as of an automobile disc brake pad. The present invention also provides a friction material and a friction member, each of which uses the friction material composition.

### Best Mode for Carrying Out the Invention

Hereinafter, a friction material composition, and a friction material and a friction member, each of which uses the friction material composition, of the present invention, will be described in detail. The friction material composition of the present invention does not contain asbestos and is a so-called "non-asbestos friction material composition".

### <Friction Material Composition>

The friction material composition of this embodiment does not contain copper or contains copper in such small amount as to be not more than 0.5 mass % even when containing copper. That is, environmentally harmful copper and copper alloys are substantially not contained, and the amount of copper element is not more than 0.5 mass %, preferably, 0 mass %. Thus, even when friction powder is generated in braking, the friction powder will not cause pollution of rivers, lakes, and oceans.

### (Steel Fibers)

The friction material composition of the present invention contains 2 to 5 mass % of steel fibers that have fiber lengths of 2500 µm or less. The type of steel fibers includes a straight type and a curled shape type. The straight fibers may be obtained by chatter machining. The curled fibers may be obtained by cutting long fibers. The straight fibers have a straight shape, whereas the curled fibers have curved portions that include simple circular shaped portions, winding portions, helical portions, and spiral portions. The steel fibers that have fiber lengths of 2500 µm or less and that are either one of the straight type or the curled shape type dissipate the frictional heat at the friction interface and thereby reduces the uneven increase in temperature as well as moderately cleans organic decomposed substances, which are generated on the friction interface. Thus, each type of the steel fibers reduces variation in the brake torque, which occurs in braking, thereby making the brake vibration unlikely to occur and decreasing the brake vibration. However, the curled fibers are preferable because less of the curled fibers come off from the friction material at the friction interface, and frictional characteristics in braking at high temperatures are more effectively maintained, compared with the straight fibers. Moreover, curled fibers that contain portions having curvature radius of 100 µm or less are more preferable because they more strongly adhere to the friction material and are made less likely to come off from the friction material at the friction interface. Regarding the curled shape steel fibers, commercially available fibers, for example, cut steel wool produced by Nippon Steel Wool Co., Ltd., may be used.

The average fiber diameter of the steel fibers in the friction material composition is preferably 100 µm or less from the viewpoint of brake vibration at high temperatures. The fiber lengths and the average fiber diameter of the steel fibers can be measured by using a microscope or other equipment. The fiber lengths and the average fiber diameter of the steel fibers contained in the friction material can be measured by observing Fe component in iron fibers by an electron beam microanalyzer such as an EPMA. The iron fibers exist in ashes that are obtained by heating the friction material at 800 °C in an air stream. Alternatively, the ashes may be magnetically separated into the iron fibers and other components, and the iron fibers may be observed by a microscope or an electron beam microanalyzer such as an EPMA.

The amount of the steel fibers is set to be in the range of 2 to 5 mass %, whereby the brake vibration is effectively decreased. If the amount of the steel fibers is less than 2 mass %, the frictional heat at the friction interface is not sufficiently dissipated. If the amount of the steel fibers exceeds 5 mass %, adhesive friction is increased between the steel fibers and cast iron of a mating material, thereby increasing brake vibration. The amount of the steel fibers contained in the friction material composition or the friction material can be measured by, for example, quantitative analysis of Fe component in any cross section of the friction material by an electron beam microanalyzer such as an EPMA. In this case, when the friction material contains Fe component that comes from only the steel fibers, the analysis value of the quantitative analysis can be just used as the amount of the steel fibers. Otherwise, when the friction material also contains Fe component that comes from materials other than the steel fibers, such as iron powder, a total amount of Fe component, which comes from the steel fibers and the other materials in a visual field of any cross section that is observed, is measured as the analysis value of the quantitative analysis. In such a case, an area ratio of Fe component of the steel fibers and the other materials in the observation visual field is measured, and the product of a ratio of the area of the steel fibers to the total area of Fe component of the steel fibers and the other materials, and the total amount of Fe component that is quantitatively analyzed, is calculated. Thus, the amount of the steel fibers is simply calculated.

### (Titanate having Layered Crystal Structure)

In the present invention, to decrease brake vibration in braking at high temperatures and improve wear resistance at low temperatures in using a composition not containing copper, titanate having a layered crystal structure is preferably contained in addition to the steel fibers. Titanate having a layered crystal structure with a fibrous shape, a scale-like shape, a columnar shape, or a plate shape may be used, but titanate with a scale-like shape, a columnar shape, or a plate shape is preferable from the viewpoint of toxicity to the human body. The titanate having the layered crystal structure is preferably at least one kind of lithium potassium titanate and magnesium potassium titanate. The amount of the titanate having the layered crystal structure is preferably 3 to 30 mass %, more preferably 5 to 10 mass %. If the amount of the titanate having the layered crystal structure is less than 3 mass %, the wear resistance at low temperatures is decreased. If the amount of the titanate having the layered crystal structure exceeds 30 mass %, the frictional coefficient is decreased.

### (Titanate having Tunnel Crystal Structure)

In the present invention, it is more preferable to contain a combination of titanate having a tunnel crystal structure and titanate having a layered crystal structure in addition to the titanate having the layered crystal structure because a wear amount of a rotor, which is a mating material, is decreased. Titanate having a tunnel crystal structure with a fibrous shape, a scale-like shape, a columnar shape, or a plate shape may be used as in the case of the titanate having the layered crystal structure, but titanate with a scale-like shape, a columnar shape, or a plate shape is preferable from the viewpoint of toxicity to the human body.

The titanate having the tunnel crystal structure may be potassium octatitanate, potassium hexatitanate, or sodium titanate and is preferably contained at 3 to 30 mass %, more preferably 5 to 10 mass %. If the amount of the titanate having the tunnel crystal structure is less than 3 mass %, the wear amount of a rotor is increased. If the amount of the titanate having the tunnel crystal structure exceeds 30 mass %, the frictional coefficient is decreased.

### (Binder)

The binder integrally binds an organic filler, an inorganic filler, a fibrous base material, and other components that are contained in the friction material composition and strengthens the friction material composition. The binder that is contained in the friction material composition of the present invention is not limited to a specific agent, and a thermosetting resin, which is normally used as a binder of a friction material, can be used.

The thermosetting resin includes, for example, a phenol resin, each kind of elastomer dispersed phenol resins such as an acrylic elastomer dispersed phenol resin and a silicone elastomer dispersed phenol resin, and each kind of modified phenol resins such as an acrylic-modified phenol resin, a silicone-modified phenol resin, a cashew-modified phenol resin, an epoxy-modified phenol resin, and an alkyl benzene-modified phenol resin. One of these resins can be used alone or a combination of two or more of these resins can be used. In particular, it is preferable to use the phenol resin, the acrylic-modified phenol resin, the silicone-modified phenol resin, or the alkyl benzene-modified phenol resin because they provide superior heat resistance, superior formability, and a preferable frictional coefficient.

The amount of the binder in the friction material composition of the present invention is preferably 5 to 20 mass %, more preferably 5 to 10 mass %. The amount of the binder is set to be in the range of 5 to 20 mass %, whereby decrease in the strength of the friction material is more reliably prevented, and a porosity of the friction material is decreased, resulting in more reliably preventing deterioration of sound vibration performance due to increase in an elastic modulus, which may cause squeaking.

### (Organic Filler)

The organic filler is contained as a friction modifier to improve the sound vibration performance, the wear resistance, and other characteristics of the friction material. The organic filler that is contained in the friction material composition of the present invention may be any material that can exhibit the above functions. Cashew dust and rubber components, which are normally used as organic fillers, may be used.

The Cashew dust can be that which is obtained by crushing a cured material of cashew nut shell oil and which are normally used in a friction material.

The rubber component includes, for example, tire rubber, acrylic rubber, isoprene rubber, nitrile-butadiene rubber (NBR), styrene-butadiene rubber (SBR), chlorinated butyl rubber, butyl rubber, and silicone rubber. One of these types of rubber can be used alone or a combination of two or more of these types of rubber can be used.

The amount of the organic filler in the friction material composition of the present invention is preferably 1 to 20 mass %, more preferably 1 to 10 mass %, and even more preferably 3 to 8 mass %. The amount of the organic filler is set to be in the range of 1 to 20 mass %, whereby increase in the elastic modulus of the friction material and deterioration of the sound vibration performance, which may cause squeaking, are avoided, and decrease in the heat resistance and decrease in the strength due to heat history are also avoided.

### (Inorganic Filler)

The inorganic filler is contained as a friction modifier to avoid decrease in the heat resistance of the friction material and to improve the wear resistance as well as the frictional coefficient. Any inorganic filler that is normally used in a friction material can be used in the friction material composition of the present invention.

The inorganic filler is, for example, tin sulfide, bismuth sulfide, molybdenum disulfide, iron sulfide, antimony trisulfide, zinc sulfide, calcium hydroxide, calcium oxide, sodium carbonate, barium sulfate, coke, mica, vermiculite, calcium sulfate, talc, clay, zeolite, mullite, chromite, titanium oxide, magnesium oxide, silica, dolomite, calcium carbonate, magnesium carbonate, titanate having a granular shape or a plate shape, zirconium silicate, y alumina, manganese dioxide, zinc oxide, triiron tetroxide, cerium oxide, zirconia, or graphite. One of these substances can be used alone or a combination of two or more of these substances can be used. The titanate having the granular shape or the plate shape may be potassium hexatitanate, potassium octatitanate, lithium potassium titanate, magnesium potassium titanate, sodium titanate, or other substance.

The amount of the inorganic filler in the friction material composition of the present invention is preferably 30 to 80 mass %, more preferably 40 to 70 mass %, and even more preferably 50 to 60 mass %. The amount of the inorganic filler is preferably set to be in the range of 30 to 80 mass % because decrease in the heat resistance is avoided and the balance of the amounts of the inorganic filler and the other components in the friction material is favorable.

### (Fibrous Base Material)

The fibrous base material exhibits a reinforcing effect in the friction material.

The friction material composition of the present invention may use inorganic fibers, metal fibers, organic fibers, carbon-based fibers, or other fibers, which are normally used as a fibrous base material. One of these fibers can be used alone or a combination of two or more of these fibers can be used.

The inorganic fibers may be ceramic fibers, biodegradable ceramic fibers, mineral fibers, glass fibers, silicate fibers, or other fibers, and one of these fibers can be used alone or a combination of two or more of these fibers can be used. Biodegradable mineral fibers containing any combination of SiO₂, Al₂O₃, CaO, MgO, FeO, Na₂O, and other substances, are preferable among these inorganic fibers. Specifically, commercial available fibers such as of the Roxul series produced by Lapinus Fibers B.V. may be used.

The metal fibers may be any fibers that are normally used in friction materials, and for example, fibers made primarily of a metal or an alloy such as of aluminum, iron, cast iron, zinc, tin, titanium, nickel, magnesium, silicon, copper, or brass can be used. The metal or the alloy of each such material may also be contained in the form of powder instead of in the form of fibers. However, it is preferable not to contain copper and alloys containing copper from the viewpoint of adverse environmental impact.

The organic fibers may be aramid fibers, cellulose fibers, acrylic fibers, phenol resin fibers, or other fibers, and one of these fibers can be used alone or a combination of two or more of these fibers can be used.

The carbon-based fibers may be flameproof fibers, pitch-based carbon fibers, PAN-based carbon fibers, activated carbon fibers, or other fibers, and one of these fibers can be used alone or a combination of two or more of these fibers can be used.

The amount of the fibrous base material in the friction material composition of the present invention is preferably 5 to 40 mass %, more preferably 5 to 20 mass %, and even more preferably 5 to 15 mass %. The amount of the fibrous base material is set to be in the range of 5 to 40 mass %, whereby a porosity suitable for a friction material is obtained, thereby preventing squeaking, and an appropriate material strength and high wear resistance are obtained as well as the formability being improved.

### <Friction Material>

The friction material of this embodiment can be produced by molding the friction material composition of the present invention by a commonly used method, which is preferably hot press molding. Specifically, for example, the friction material composition of the present invention may be uniformly mixed by a mixer, such as a Loedige mixer ("Loedige" is a registered trademark), a pressurizing kneader, or an Eirich mixer ("Eirich" is a registered trademark). The mixture may be premolded in a mold, and the premold may be further molded at a molding temperature of 130 to 160 °C and at a molding pressure of 20 to 50 MPa for a molding time of 2 to 10 minutes. The molded body may be heat treated at a temperature of 150 to 250 °C for 2 to 10 hours. Thus, the friction material is produced. The friction material may be produced by further performing coating, a scorch treatment, or a polishing treatment as necessary.

### <Friction Member>

The friction member of this embodiment is formed by using the friction material of this embodiment as a friction material to be used as a friction surface. The friction member has, for example, one of the following structures.
(1) A structure formed only of the friction material
(2) A structure formed of a back metal and a friction material, which is mounted on the back metal and is made of the friction material composition of the present invention and which is to be used as a friction surface.
(3) A structure of interposing both a primer layer, which modifies a surface of the back metal to improve an effect for adhering the back metal, and an adhesive layer, which adheres the back metal and the friction material, between the back metal and the friction material of the structure (2)

A back metal is normally used in a friction member to improve the mechanical strength of the friction member. The material of the back metal may be metal, fiber reinforced plastic, or of another type, and specifically, the material may be iron, stainless steel, inorganic fiber-reinforced plastic, carbon fiber-reinforced plastic, or of another type. The primer layer and the adhesive layer may be those normally used in a friction member, such as a brake shoe.

The friction material composition of this embodiment is superior in the thermal conductivity, the wear resistance, and the frictional coefficient and is thereby effectively used as a top finishing material of, for example, a disc brake pad or a brake lining for automobiles and other vehicles. The friction material composition of this embodiment can also be used by being molded into an underlying material of a friction member. The top finishing material is a friction material to be used as a friction surface of a friction member. The underlying material is a layer that is interposed between a friction material, which is to be used as a friction surface of a friction member, and a back metal and that is used to improve shear strength in the proximity to adhered portions of the friction material and the back metal, crack resistance, and other characteristics.

### Examples

Hereinafter, the friction material composition, the friction material, and the friction member of the present invention will be described in more detail by using examples and comparative examples, but the present invention is not limited by these examples.

### <Examples 1 to 17 and Comparative Examples 1 to 3>

### (Preparation of Disc Brake Pad)

Materials were mixed together in accordance with the mixing ratios shown in Tables 1 to 3, and friction material compositions of examples 1 to 17 and comparative examples 1 to 3 were obtained. The mixing ratios shown in Tables 1 to 3 are in mass %. Steel fibers used in the examples and the comparative examples are "Q0-160" produced by Sinoma Co. and have a curled shape, fiber lengths of 300 to 2500 µm, and an average fiber diameter of 58 µm. The fiber lengths were measured by observing the fiber lengths of 100 fibers by a microscope produced by Keyence Corporation. The average fiber diameter was obtained by averaging the fiber diameters of 50 fibers that were observed by the microscope produced by Keyence Corporation.

Each of the friction material compositions was mixed by a Loedige mixer (produced by Matsubo Corporation, product name: Loedige mixer M20), and the mixtures were premolded by a molding press produced by Oji Machine Co., Ltd. The premolds were hot press molded at a molding temperature of 140 to 160 °C and at a molding pressure of 30 MPa for a molding time of 5 minutes by a molding press produced by Sanki Seiko Co., Ltd. in conjunction with corresponding iron back metals produced by Hitachi Automotive Systems, Ltd. The molded bodies were heat treated at 200 °C for 4.5 hours, polished by a rotary polisher, and then scorch treated at 500 °C, whereby disc brake pads of the examples 1 to 17 and the practical examples 1 to 3 were obtained. The prepared disc brake pad of each of the examples and the comparative examples has a back metal with a thickness of 6 mm, a friction material with a thickness of 11 mm, and a friction material projected area of 52 cm².

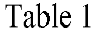

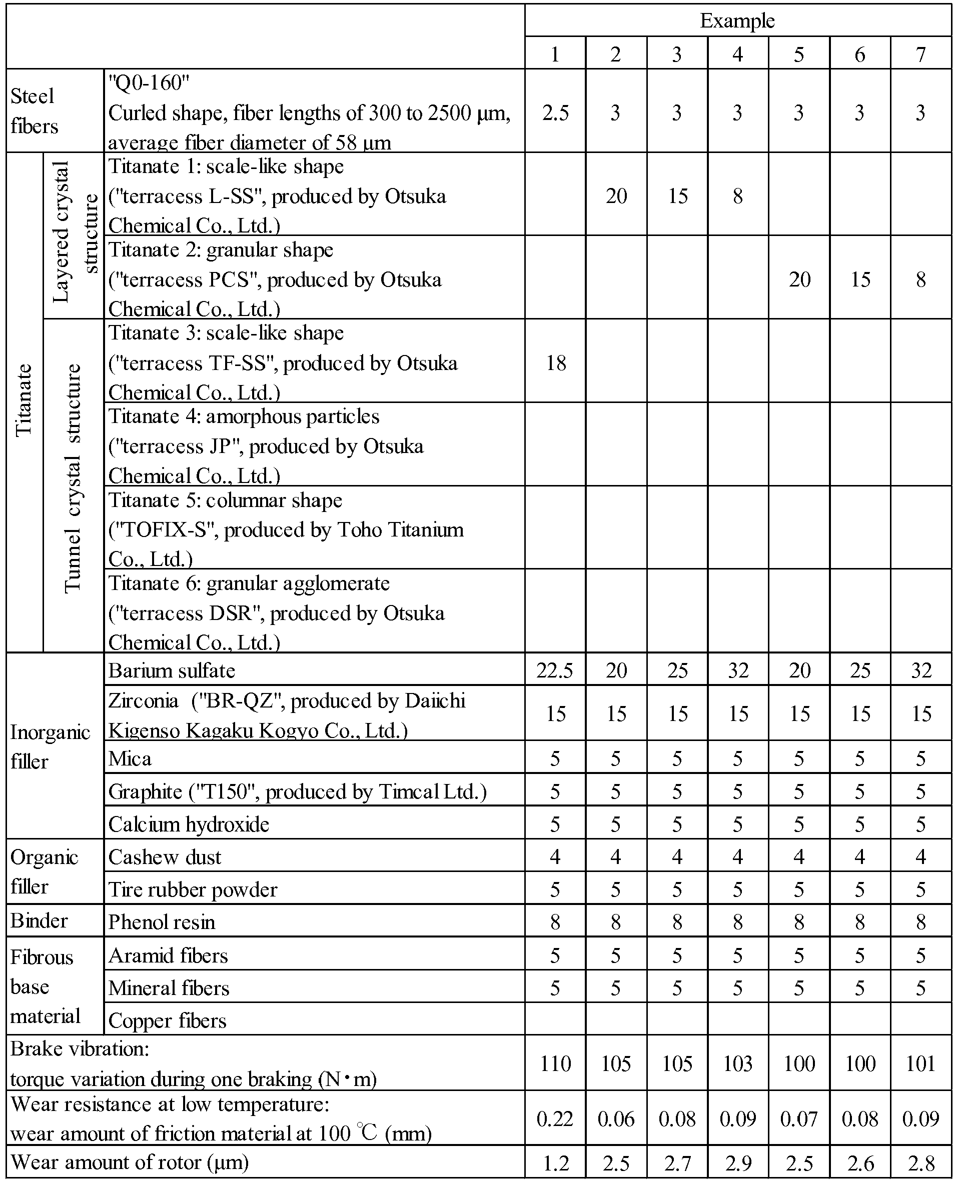

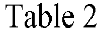

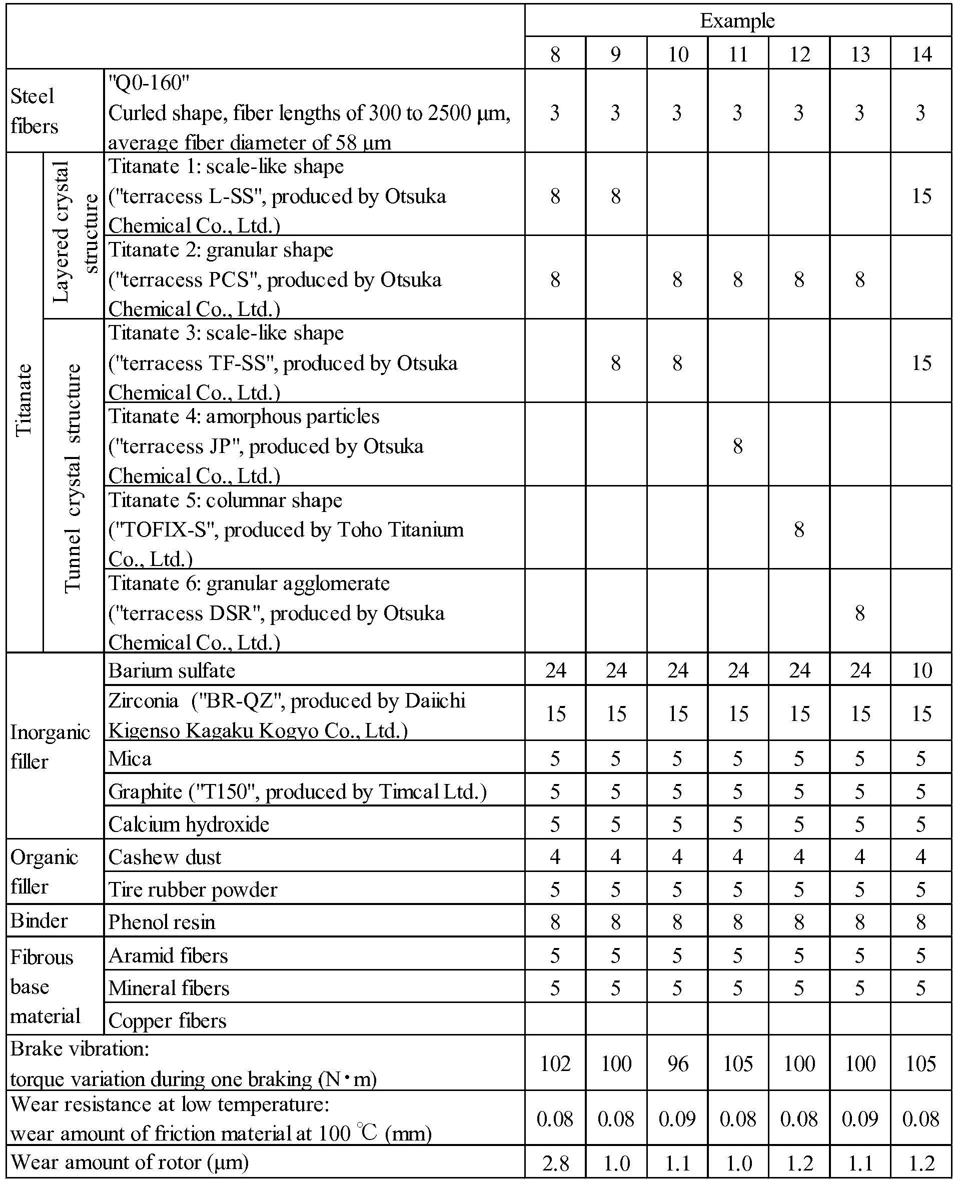

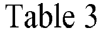

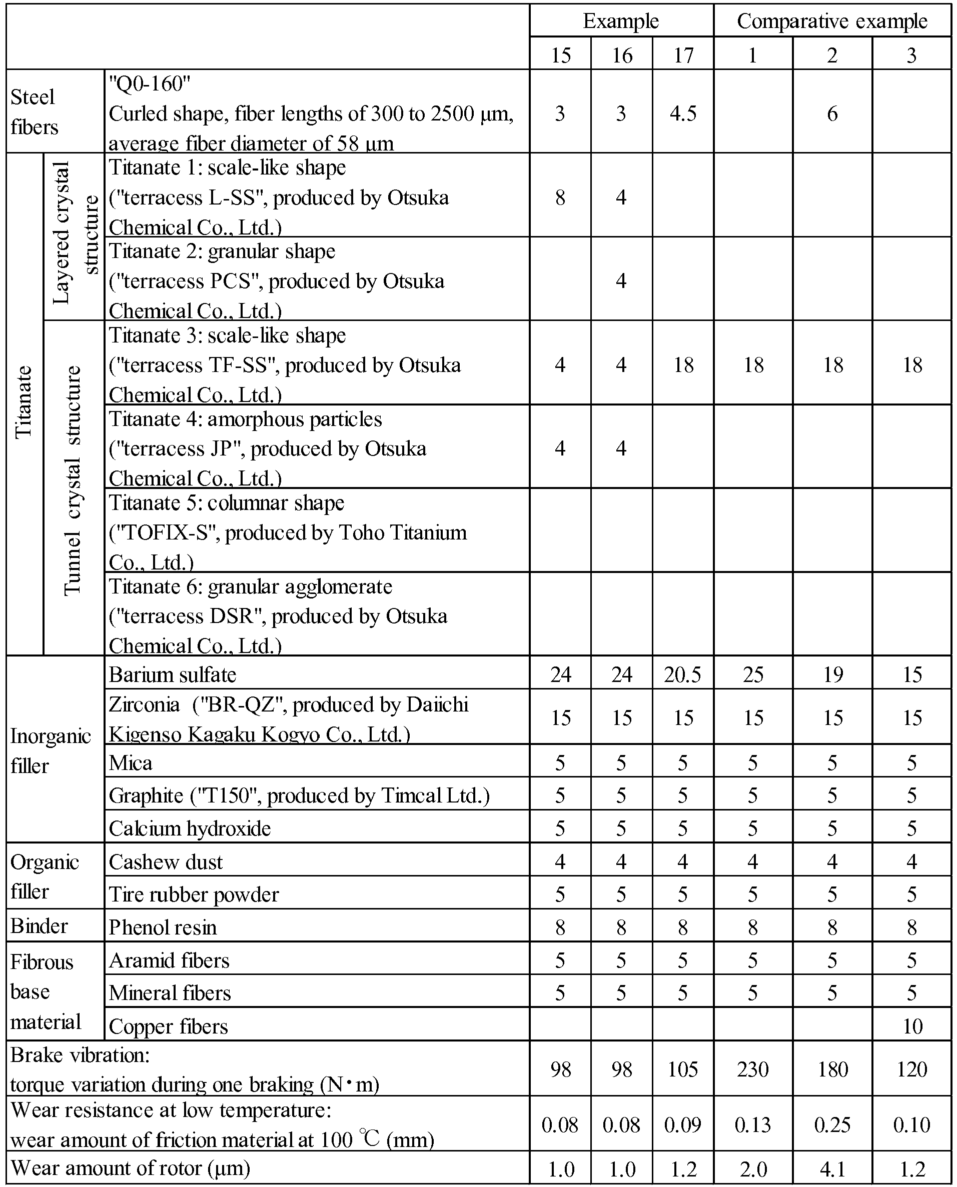

### (Brake Vibration)

A test was performed in accordance with JASO C406 specified by the Society of Automotive Engineers of Japan, Inc., whereby a torque variation during one braking was evaluated in a second effective test at a vehicle speed of 245 km/h and at a deceleration of 0.3 G. The torque variation was measured at a portion at which the torque variation was maximum during one braking.

### (Wear Resistance at Low Temperature)

Wear resistance was measured in accordance with JASO C427 specified by the Society of Automotive Engineers of Japan, Inc. A wear amount of the friction material corresponding to braking 1,000 times was evaluated at a braking temperature of 100 °C, a vehicle speed of 50 km/h, and a deceleration of 0.3 G as the wear resistance at a low temperature.

### (Wear Amount of Rotor)

A test piece of 25 mm × 25 mm × 8 mm was cut out from the surface of each of the friction materials and was pressed onto a disc rotor, which rotated at a circumferential speed corresponding to 130 km/h, at a pressure of 73.5 kPa, and then the test piece was dragged for 22 hours, whereby a wear amount of the rotor was measured.

These tests were performed by using a dynamometer at an inertia of 7 kgf·m·sec². Additionally, these tests were performed by also using a ventilated disc rotor (produced by Kiriu Corporation, Material: FC190) and an ordinary colette caliper of the pin slide type.

Each of the examples 1 to 17, which did not contain copper and contained a predetermined amount of the steel fibers having specific fiber lengths, exhibited brake vibration that was not greater than the brake vibration of the comparative example 3, which contained copper. It is clear that the brake vibration of each of the examples 1 to 17 was less than the brake vibration of each of the comparative example 1, which did not contain the steel fibers having fiber lengths of 2500 µm or less, and the comparative example 2, which contained the steel fibers having fiber lengths of 2500 µm or less at greater than 5 mass %. The brake vibration was more decreased, and the wear amount of the rotor was more decreased, in each of the examples 2 to 16, which contained the titanate having the layered crystal structure.

### Industrial Applicability

The friction material composition of the present invention does not contain copper, which has a high environmental load, and enables decrease in brake vibration in braking at high temperatures, compared with a conventional composition. Accordingly, the friction material composition of the present invention may be suitably used in a friction material and a friction member of an automobile brake pad or other part.

## Claims

1. A friction material composition containing a binder, an organic filler, an inorganic filler, and a fibrous base material, and the friction material composition containing no copper as an element or containing not more than 0.5 mass % of copper, and containing 2 to 5 mass % of steel fibers that have fiber lengths of 2500 µm or less.

2. The friction material composition according to claim 1, wherein the steel fibers have a curled shape.

3. The friction material composition according to claim 1 or 2, wherein the steel fibers have an average fiber diameter of 100 µm or less.

4. The friction material composition according to any one of claims 1 to 3, further containing titanate having a layered crystal structure.

5. The friction material composition according to any one of claims 1 to 3, further containing titanate having a tunnel crystal structure and titanate having a layered crystal structure.

6. The friction material composition according to claim 4 or 5, wherein the titanate having the layered crystal structure is lithium potassium titanate or magnesium potassium titanate.

7. The friction material composition according to claim 5, wherein the titanate having the tunnel crystal structure is potassium hexatitanate, potassium octatitanate, or sodium titanate.

8. A friction material containing a binder, an organic filler, an inorganic filler, and a fibrous base material, and the friction material containing no copper as an element or containing not more than 0.5 mass % of copper, containing steel fibers, and containing Fe component that comes only from the steel fibers, wherein the steel fibers have an average fiber length of 2500 µm or less, which is measured by observing the Fe component in iron fibers by an electron beam microanalyzer such as an EPMA, the iron fibers exist in ashes that are obtained by heating the friction material at 800 °C in an air stream, and an average amount of the Fe component is 2 to 5 mass %, which is obtained by quantitative analysis of the Fe component in any ten cross sections of the friction material by an electron beam microanalyzer.

9. A friction material containing a binder, an organic filler, an inorganic filler, and a fibrous base material, and the friction material containing no copper as an element or containing not more than 0.5 mass % of copper, containing steel fibers, and containing Fe component that comes from the steel fibers and other material,
wherein the steel fibers have an average fiber length of 2500 µm or less, which is measured by observing the Fe component in iron fibers by an electron beam microanalyzer such as an EPMA, the iron fibers exist in ashes that are obtained by heating the friction material at 800 °C in an air stream, an average value of product of an analysis value of the Fe component and a ratio of an area of the steel fibers to a total area of the Fe component of the steel fibers and the other material is 2 to 5 mass %, the analysis value of the Fe component is obtained by quantitative analysis of the Fe component in any ten cross sections of the friction material by an electron beam microanalyzer, and the area of the steel fibers and the total area of the Fe component of the steel fibers and the other material are observed in a visual field of any of the ten cross sections.

10. A friction material obtained by molding the friction material composition recited in any one of claims 1 to 7.

11. A friction member obtained by using the friction material recited in any one of claims 8 to 10 and a back metal.
